# FASCICULE DE BREVET EUROPEEN

(11) **EP 3 078 101 B1**
(45) Date de publication et mention de la délivrance du brevet: **11.07.2018**
(21) Numéro de dépôt: 14789182.4
(22) Date de dépôt: 19.09.2014
(51) Int. Cl.: H02K 5/22, B64C 13/00, H02K 7/14, H02K 7/116, B64C 13/42, B64C 13/44, H02K 7/00, B64C 13/50

(54) **ACTIONNEUR ELECTRIQUE A MOYENS MANUELS D'ENTRAINEMENT**
ELEKTRISCHER STELLANTRIEB MIT MANUELLER ANTRIEBSVORRICHTUNG
ELECTRIC ACTUATOR HAVING MANUAL DRIVING MEANS

(30) Priorité: 05.12.2013 US 201361912267 P
(43) Date de publication de la demande: 12.10.2016
(73) Titulaire: Safran Electronics & Defense, 92100 Boulogne-Billancourt (FR)
(72) Inventeur: CHAVIGNIER, Louis, F-92100 Boulogne-Billancourt (FR); WERQUIN, Mickael, F-92100 Boulogne-Billancourt (FR); VIENNOT, Severi, F-92100 Boulogne-Billancourt (FR); CARTRY, Thierry, F-92100 Boulogne-Billancourt (FR)
(74) Mandataire: Lavialle, Bruno François Stéphane
(86) Numéro de dépôt international: PCT/EP2014/070012
(87) Numéro de publication internationale: WO 2015/082090

(56) Documents cités:
- CN-A- 102 868 253
- JP-A- H10 213 253
- US-A- 3 038 352
- US-A- 4 125 790
- US-A1- 2013 015 381
- US-B2- 6 768 234

## Description

L'invention concerne la motorisation d'un élément mobile relativement à une structure fixe. L'invention concerne notamment les actionneurs pour motoriser une surface mobile de vol d'un aéronef, comme une gouverne, un aileron, un élevon, un volet...

Un aéronef comprend des surfaces de vol, comme des volets, qui sont mobiles entre une position déployée et une position rétractée et qui sont déplacées entre leurs deux positions par des actionneurs. Initialement, ces actionneurs étaient purement mécaniques avant d'être remplacés par des actionneurs hydrauliques. Dans les aéronefs les plus récents, les actionneurs hydrauliques sont désormais de plus en plus souvent remplacés par des actionneurs électriques.

Un tel actionneur électrique comprend un boîtier contenant un moteur électrique qui est pourvu de moyens de raccordement à une source de puissance électrique de l'aéronef et qui possède un arbre de sortie en prise avec la surface de vol via un dispositif de transmission de mouvement tel qu'un dispositif vis-écrou.

Pour certaines opérations de maintenance alors que l'aéronef est au sol, il faut pouvoir déplacer les surfaces de vol. Il est alors nécessaire d'alimenter l'actionneur et de piloter celui-ci en vue de réaliser le mouvement voulu. Ceci complique les procédures de maintenance notamment en vue de préserver la sécurité du personnel.

Il est connu, du document US-A-4125790, un actionneur électrique susceptible d'être activé manuellement et pourvu d'un dispositif de protection électromagnétique inhibant de l'activation manuelle lorsque le moteur électrique de l'actionneur est alimenté. Le document US-A-6768234 décrit un actionneur électrique équipé lui d'un dispositif de protection par interrupteurs.

Un but de l'invention est de proposer un moyen pour faciliter l'actionnement d'un élément mobile, normalement motorisé, en dehors d'un mode de fonctionnement normal dudit élément mobile. Dans une application à un aéronef, l'invention vise à faciliter l'actionnement des surfaces mobiles de vol lors des opérations de maintenance.

A cet effet, on prévoit, selon l'invention, un actionneur comprenant un bâti, un moteur électrique qui est fixé au bâti et a un rotor lié en rotation à un arbre de sortie, et un connecteur électriquement relié au moteur et solidaire du bâti pour être raccordé à un connecteur complémentaire. L'actionneur comprend un dispositif d'entraînement secondaire comprenant :
- un arbre secondaire ayant une première extrémité qui s'étend à l'extérieur du bâti et est agencée pour être accouplée en rotation à un outil d'entraînement en rotation,
- des moyens d'accouplement en rotation d'une deuxième extrémité de l'arbre secondaire et de l'arbre de sortie, et
- des moyens d'activation des moyens d'accouplement qui sont agencés pour interdire l'accouplement en rotation de l'arbre secondaire et de l'arbre de sortie uniquement lorsque le connecteur complémentaire est raccordé au connecteur solidaire du bâti.

L'unité d'entraînement secondaire est ainsi agencée pour permettre un actionnement par un opérateur via l'outil d'entraînement en rotation sans avoir besoin d'alimenter le moteur de l'actionneur et sans risque pour l'opérateur qui manipulerait l'outil.

Il sera fait référence aux dessins annexés, parmi lesquels :
- la figure 1 est une vue en perspective d'un actionneur selon l'invention, ledit actionneur étant connecté à une source d'alimentation en énergie électrique,
- la figure 2 est une vue partielle de cet actionneur en coupe selon le plan II de la figure 1,
- la figure 3 est une vue en perspective de l'actionneur de l'invention, l'actionneur étant déconnecté de la source d'alimentation en énergie électrique,
- la figure 4 est une vue partielle de cet actionneur en coupe selon le plan IV de la figure 3, avant qu'un outil soit engagé sur l'unité d'entraînement secondaire,
- la figure 5 est une vue partielle de cet actionneur en coupe le long de la ligne V-V indiquée sur la figure 4,
- la figure 6 est une vue analogue à la figure 4, un outil étant engagé sur l'unité d'entraînement secondaire,
- la figure 7 une vue partielle de cet actionneur en coupe le long de la ligne VII-VII indiquée sur la figure 6,

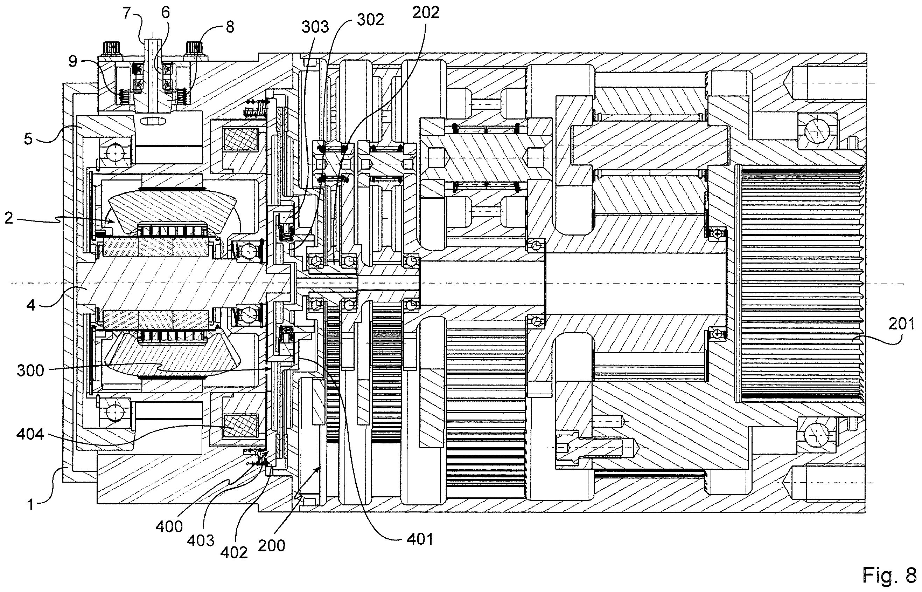

- la figure 8 est une vue de cet actionneur en coupe selon le plan VIII de la figure 1.

L'invention est ici décrite en application à la motorisation d'une surface de vol d'un aéronef.

L'actionneur comprend un bâti ou boîtier 1 contenant un moteur électrique 2 et une unité d'entraînement secondaire pour déplacer électriquement ou manuellement la surface mobile de vol.

Le moteur 2 est pourvu d'un connecteur 3 de raccordement du moteur électrique 2 à un réseau électrique de puissance de l'aéronef. Le connecteur 3 débouche ici sur une face 13 du boîtier 1. Plus précisément, le connecteur 3 est fixé sur le boîtier 1 pour s'étendre en saillie de la face 13.

L'actionneur a un arbre de sortie 4 qui est lié en rotation au rotor du moteur 2 et qui a une première extrémité reliée à une boîte de vitesse généralement désignée en 200 ayant une sortie 201 débouchant à l'extérieur du boîtier 1 pour être attachée, de façon connue en elle-même, à la surface mobile de vol (cette dernière ne fait pas partie de l'invention et n'est pas représentée sur les figures). A l'opposé, l'arbre de sortie a une deuxième extrémité qui s'étend dans le boîtier 1 et à laquelle est fixée une couronne dentée 5.

Plus précisément, la première extrémité de l'arbre 4 est reliée à l'entrée 202 de la boîte de vitesse 200 par un limiteur de couple généralement désigné en 300. Le limiteur de couple est connu en lui-même et comporte ici une couronne externe 301 qui est solidaire de la première extrémité et qui entoure une platine 302 solidaire de l'entrée 202 de la boîte de vitesse. La platine 302 porte des rouleaux 303 rappelés élastiquement dans une position en saillie radiale dans laquelle ils peuvent transmettre un couple entre la couronne externe 301 et la platine 302. Un frein peut être associé à l'actionneur et/ou à la surface mobile de vol pour empêcher tout risque de mouvement de retour sous charge quand l'opérateur actionne l'unité d'entraînement secondaire. Le frein est ici un frein à friction généralement désigné en 400 qui comprend une platine porte garniture 401 qui est solidaire en rotation de la platine 302 et qui s'étend entre une partie fixe du boîtier 1 et une mâchoire 402 mobile axialement. Des ressorts 403 appliquent la mâchoire 402 contre la platine porte garniture 401 qui est serrée contre la partie fixe du boîtier ; et un solénoïde attire la mâchoire 402 à l'encontre des ressorts 403. Ce frein est agencé pour être actif en l'absence d'alimentation de l'actionneur.

L'unité d'entraînement secondaire comprend un arbre secondaire 6 ayant une première extrémité pourvue d'une interface 7 d'engagement d'un outil et une deuxième extrémité à laquelle est fixé un pignon conique 8. L'interface 7 est ici une empreinte femelle carrée de type 3/8". D'autres types d'interface sont utilisables comme une empreinte femelle hexagonale ou une partie mâle qui ne soit pas de révolution pour pouvoir coopérer avec un outil à douilles. Le pignon conique 8 a une denture agencée pour coopérer avec la denture de la couronne dentée 5. L'interface 7 s'étend à l'extérieur du boîtier 1 et le pignon conique 8 s'étend à l'intérieur du boîtier 1.

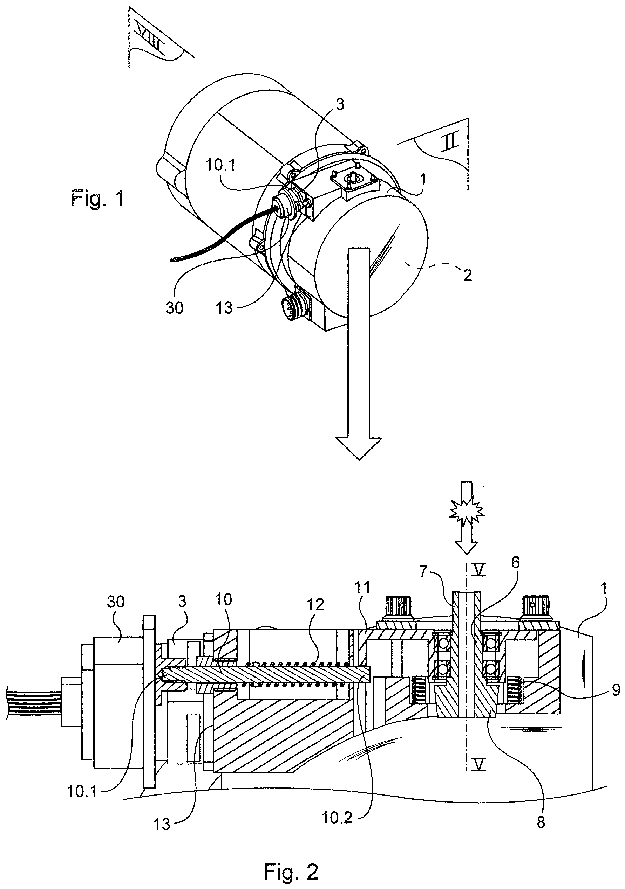

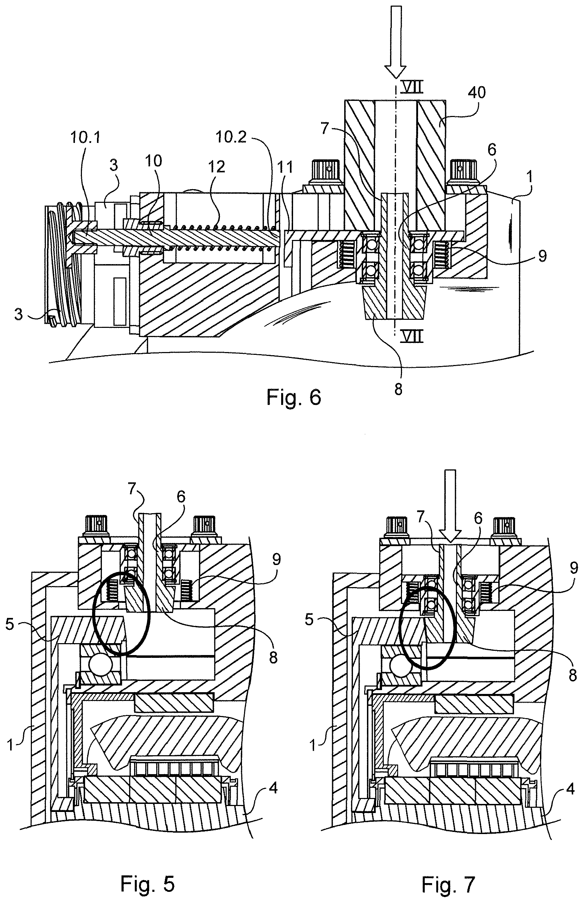

L'arbre secondaire 6 est monté sur le boîtier 1 pour pivoter autour de son axe central. Plus précisément, l'arbre secondaire 6 est monté pour pivoter dans un palier 11 qui est monté dans le boîtier 1 pour coulisser le long de cet axe central entre une première position dans laquelle le pignon conique 8 est dégagé de la couronne dentée 5 (figures 2, 4, 5) et une deuxième position dans laquelle le pignon conique 8 engrène avec la couronne dentée 5 (figures 6, 7). L'arbre secondaire 6 est rappelé dans sa première position par un élément élastique, ici un ressort de compression 9 entourant l'arbre secondaire 6 et prenant appui contre une surface du boîtier 1 et un épaulement du palier 11.

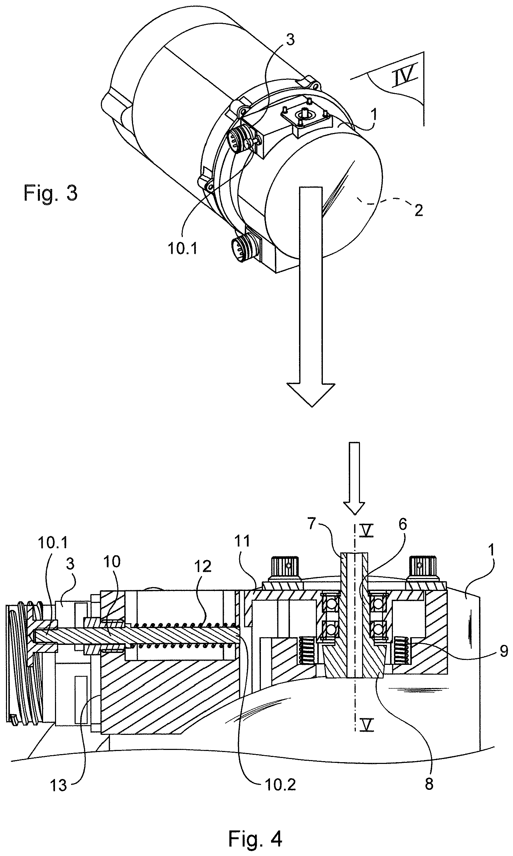

Une tige 10 est montée dans le boîtier 1 pour coulisser entre une première position et une deuxième position selon une direction d'engagement d'un connecteur 30 sur le connecteur 3, le connecteur 30 étant complémentaire du connecteur 3. Dans la première position, la tige 10 a une première extrémité 10.1 en saillie de la face 13 au voisinage du connecteur 3 et une deuxième extrémité 10.2 écartée d'un épaulement du palier 11 (figure 4). Dans la deuxième position, la tige 10 est enfoncée de sorte que la deuxième extrémité 10.2 de la tige 10 s'étende en saillie sous l'épaulement du palier 11 (figure 2). Ainsi, la tige 10 dans sa première position laisse libre le coulissement du palier 11, et donc de l'arbre secondaire 6, entre ses deux positions et la tige 10 dans sa deuxième position s'oppose au coulissement du palier 11 vers la deuxième position de l'arbre secondaire 6. La tige 10 est rappelée vers sa première position par un élément élastique, ici un ressort de compression 12 s'étendant autour de la tige 10 entre un épaulement de la tige 10 et une surface du boîtier 1.

Il est entendu que la tige 10 est dans sa première position quand il n'y a pas de connecteur complémentaire 30 raccordé au connecteur 3 et est amené vers sa deuxième position par le connecteur complémentaire 30 qui appuie sur la première extrémité 10.1 de la tige 10 lorsque le connecteur complémentaire 30 est raccordé au connecteur 3. Quand l'arbre secondaire 6 est dans sa seconde position, l'épaulement du palier 11 empêche la tige 10 de coulisser vers sa seconde position de sorte que la tige 10 empêche le raccordement d'un connecteur complémentaire au connecteur 3.

Le fonctionnement de l'invention va maintenant être décrit.

En mode de fonctionnement normal, le connecteur complémentaire 30 est raccordé au connecteur 3 de l'actionneur comme représenté aux figures 1 et 2. La tige 10 est donc maintenue dans sa deuxième position et l'arbre secondaire 6 est maintenu dans sa première position.

Pour réaliser une opération de maintenance, l'opérateur déconnecte le connecteur complémentaire 30 et le connecteur 3, et la tige 10 est ramenée vers sa première position par le ressort de compression 12 (comme représenté sur les figures 3 et 4).

L'opérateur engage alors un outil électroportatif de type visseuse (symbolisé en 40 sur la figure 6) sur l'interface 7 et pousse sur l'outil pour déplacer l'arbre secondaire 6 de sa première position (figure 5) vers sa deuxième position (figures 6 and 7). L'arbre secondaire 6 est alors relié à l'arbre de sortie 4 à travers le pignon 8 et la couronne dentée 5 (comme montré sur la figure 7) de sorte qu'une rotation de l'arbre secondaire 6 produit une rotation de l'arbre de sortie 4. Si l'opérateur doit déplacer la surface mobile de vol jusqu'à ce qu'elle arrive en contact contre une butée fixe de l'aéronef, l'opérateur peut détecter l'arrivée en butée de la surface mobile car le couple augmente à cet instant.

Quand l'opérateur retire l'outil, l'arbre secondaire 6 reviens vers sa première position sous l'effet du ressort de compression 9.

Cette solution permet de :
- prévenir une rotation non souhaitée du moteur 2 (ce qui diminue les risques pour l'opérateur) ;
- éviter les risques de contact entre le pignon 8 de l'unité d'entraînement secondaire et la couronne dentée 5 entraînée par le moteur 2 pendant que le moteur 2 de l'actionneur fonctionne normalement (ce qui permet d'éviter d'avoir à dimensionner les composants de l'unité d'entraînement secondaire pour supporter aussi les contraintes liées au fonctionnement normal de l'actionneur).

Quand le frein est verrouillé, le frein exerce un effort suffisant pour maintenir la surface mobile de vol en position en s'opposant par exemple à l'action de la gravité mais tout en permettant que l'opérateur puisse déplacer s'il le souhaite la surface mobile de vol au moyen de l'unité d'entraînement secondaire (c'est-à-dire sans devoir alimenter le moteur 2 de l'actionneur). Le couple exercé par la surface mobile de vol (du fait de son poids) est inférieur au couple résistant engendré par le frein (du fait de la friction) qui est inférieur au couple engendré par l'unité d'entraînement secondaire. Ceci améliore la sécurité en minimisant les risques pour l'opérateur et la mécanique de l'actionneur.

De préférence, l'unité d'entraînement secondaire comprend un limiteur de couple en vue de limiter le risque d'une détérioration de la surface mobile de vol ou de l'actionneur en raison d'un couple excessif transmis via l'unité d'entraînement secondaire.

A titre d'exemple, les rapports d'engrenages sont déterminés pour respecter des contraintes de temps. L'utilisation de l'unité d'entraînement secondaire avec un outil tournant à 750 tours par minute permet de déplacer la surface mobile de vol d'une de ces positions à l'autre (pour une course d'environ 90°, par exemple 86°) en 10 minutes au plus en exerçant un couple maximal inférieur à 1 Nm. Le rapport de transmission total entre la surface mobile de vol et l'interface 7 est par exemple d'environ 28400.

A titre d'exemple, le couple maximal est par exemple égal à 0,71 Nm (soit 6,3 in.lbs) et se décompose comme suit :
- le couple nécessaire au déplacement de la surface mobile de vol, soit 0,02 Nm à l'interface 7 correspondant à 476,71 Nm à la surface mobile de vol,
- le couple nécessaire pour vaincre le couple résistant du frein, soit 0,69 Nm à l'interface 7 et 18482,5 Nm à la surface mobile de vol.

Quand la surface mobile de vol arrive en butée, le limiteur de couple limite le couple transmissible à la surface mobile de vol par l'opérateur via l'unité d'entraînement secondaire. Le couple résistant engendré par le limiteur de couple est de 1,18 Nm et le couple transmis à la surface mobile de vol via l'unité d'entraînement secondaire est de 12734,92 Nm.

Le tableau suivant résulte d'une analyse de différentes erreurs de manipulation par l'opérateur de maintenance et les conséquences au niveau de l'actionneur selon l'invention.

| **Erreur de manipulation** | **Conséquence** |
|---|---|
| L'opérateur ne déconnecte pas l'alimentation de puissance avant de tenter d'utiliser le dispositif d'entraînement secondaire. | Le dispositif d'entraînement secondaire ne peut être lié en rotation au moteur. |
| L'opérateur arrête l'outil avant que la surface mobile de vol n'atteigne une de ses butées. | Le frein maintient la surface de vol mobile dans ladite position sans que la surface mobile de vol n'exerce de couple en retour sur l'actionneur. |
| L'outil n'est pas arrêté alors que la surface mobile de vol est arrivée en butée. | Le limiteur de couple limite le couple transmis à la surface mobile de vol à une valeur acceptable. |
| L'opérateur ne désaccouple pas l'outil après avoir déplacé la surface mobile de vol. | Les ressorts de rappel ne peuvent ramener l'arbre secondaire 6 et la tige 10 dans leurs premières positions de sorte que le connecteur complémentaire ne peut être raccordé au connecteur 3. |

Bien entendu, l'invention n'est pas limitée au mode de réalisation décrit mais englobe toute variante entrant dans le champ de l'invention telle que définie par les revendications.

L'actionneur peut comprendre un frein et un limiteur de couple pour éviter la dégradation de la surface lorsque l'opérateur arrive en butée sans diminuer la vitesse de rotation de l'outil de maintenance. Ceci est cependant accessoire.

## Revendications

1. Actionneur comprenant un bâti (1), un moteur électrique (2) qui est fixé au bâti (1) et a un rotor lié en rotation à un arbre de sortie (4), et un connecteur (3) électriquement relié au moteur (2) et solidaire du bâti (1) pour être raccordé à un connecteur complémentaire (30), l'actionneur comprend un dispositif d'entraînement secondaire comprenant :
- un arbre secondaire (6) ayant une première extrémité qui s'étend à l'extérieur du bâti (1) et est agencée pour être accouplée en rotation à un outil d'entraînement en rotation,
- des moyens d'accouplement en rotation d'une deuxième extrémité de l'arbre secondaire (6) et de l'arbre de sortie, et
- des moyens d'activation des moyens d'accouplement qui comportent une tige d'activation (10) débouchant dans le connecteur (3) solidaire du bâti (1) et qui sont agencés pour interdire l'accouplement en rotation de l'arbre secondaire (6) et de l'arbre de sortie uniquement lorsque le connecteur complémentaire (30) est raccordé au connecteur solidaire du bâti.

2. Actionneur selon la revendication 1, dans lequel les moyens d'accouplement comprennent un premier élément (8) solidaire de la deuxième extrémité de l'arbre secondaire (6) et un deuxième élément (5) lié en rotation à l'arbre de sortie, l'arbre secondaire (6) étant monté pour coulisser selon une première direction de coulissement entre une première position dans laquelle les deux éléments (8, 5) sont dégagés l'un de l'autre et une deuxième position dans laquelle les deux éléments (8, 5) sont accouplés en rotation l'un avec l'autre, un organe élastique (9) rappelant l'arbre secondaire (6) dans sa première position.

3. Actionneur selon la revendication 2, dans laquelle la tige d'activation (10) est montée pour coulisser selon une deuxième direction de coulissement sensiblement perpendiculaire à la première direction de coulissement entre une première position dans laquelle la tige (10) a une première extrémité en saillie au voisinage du connecteur (3) solidaire du bâti (1) et une deuxième extrémité dégagée des moyens d'accouplement, et une deuxième position dans laquelle la tige d'activation (10) est enfoncée par rapport au bâti (1) et la deuxième extrémité est en saillie entre les éléments (8, 5) pour empêcher leur accouplement.

4. Actionneur selon l'une quelconque des revendications précédentes, comprenant un frein pour maintenir en position l'arbre de sortie en l'absence d'alimentation du moteur (2).

5. Actionneur selon l'une quelconque des revendications précédentes, comprenant un limiteur de couple pour éviter la dégradation de la surface lorsque l'opérateur arrive en butée sans diminuer la vitesse de rotation de l'outil de maintenance.

## Patentansprüche

1. Aktor, umfassend einen Rahmen (1), einen Elektromotor (2), der am Rahmen (1) befestigt ist und einen Rotor hat, der drehfest mit einer Abtriebswelle (4) verbunden ist, sowie einen Verbinder (3), der elektrisch mit dem Motor (2) und fest mit dem Rahmen (1) verbunden ist, um mit einem komplementären Verbinder (30) verbunden zu werden, wobei der Aktor eine Sekundärantriebsvorrichtung enthält, die umfasst:
- eine Sekundärwelle (6), die ein erstes Ende hat, das sich außerhalb des Rahmens (1) erstreckt und ausgebildet ist, um drehbar mit einem Drehantriebswerkzeug gekoppelt zu werden,
- Drehkopplungsmittel zur Drehkopplung eines zweiten Endes der Sekundärwelle (6) und der Abtriebswelle, und
- Aktivierungsmittel zur Aktivierung der Kopplungsmittel, wobei die Aktivierungsmittel eine Aktivierungsstange (10) umfassen, die in den fest mit dem Rahmen (1) verbunden Verbinder (3) mündet, und die ausgebildet sind, um die Drehkopplung der Sekundärwelle (6) und der Abtriebswelle nur zu verhindern, wenn der komplementäre Verbinder (30) mit dem fest mit dem Rahmen verbundenen Verbinder verbunden ist.

2. Aktor nach Anspruch 1, bei dem die Kopplungsmittel ein erstes Element (8) umfassen, das fest mit dem zweiten Ende der Sekundärwelle (6) verbunden ist, sowie ein zweites Element (5), das drehfest mit der Abtriebswelle verbunden ist, wobei die Sekundärwelle (6) in einer ersten Verschiebungsrichtung zwischen einer ersten Position, in der die beiden Elemente (8, 5) voneinander gelöst sind, und einer zweiten Position verschiebbar gelagert ist, in der die beiden Elemente (8, 5) miteinander in Drehung gekoppelt sind, wobei ein elastisches Element (9) die Sekundärwelle (6) in ihre erste Position rückstellt.

3. Aktor nach Anspruch 2, bei dem die Aktivierungsstange (10) in einer zweiten Verschiebungsrichtung, die im Wesentlichen senkrecht zur ersten Verschiebungsrichtung ist, zwischen einer ersten Position, in der die Stange (10) ein erstes Ende hat, das nahe dem fest mit dem Rahmen verbundenen Verbinder (3) vorsteht, sowie ein zweites Ende, das von den Kopplungsmitteln gelöst ist, und einer zweiten Position verschiebbar gelagert ist, in der die Aktivierungsstange (10) in Bezug auf den Rahmen (1) hineingedrückt ist und das zweite Ende zwischen den Elementen (8, 5) vorsteht, um deren Kopplung zu verhindern.

4. Aktor nach einem der vorhergehenden Ansprüche, umfassend eine Bremse, um die Abtriebswelle bei fehlender Versorgung des Motors (2) in Position zu halten.

5. Aktor nach einem der vorhergehenden Ansprüche, umfassend einen Drehmomentbegrenzer, um die Beschädigung der Oberfläche zu vermeiden, wenn die Bedienperson den Anschlag erreicht, ohne die Drehgeschwindigkeit des Wartungswerkzeugs zu verringern.

## Claims

1. An actuator comprising a frame (1), an electric motor (2) that is fastened to the frame (1) and to a rotor that is constrained to rotate with an outlet shaft (4), and a connector (3) that is electrically connected to the motor (2) and that is secured to the frame (1) in order to be connected to a complementary connector (30), the actuator includes a secondary drive device comprising:
a secondary shaft (6) having a first end that extends outside the frame (1) and that is arranged to be coupled to rotate with a rotary drive tool;
• means for coupling a second end of the secondary shaft (6) in rotation with the outlet shaft; and
• means for activating coupling means that include an activation rod (10) opening out into the connector (3) secured to the frame (1) and that are arranged to prevent the secondary shaft (6) being coupled in rotation with the outlet shaft only when the complementary connector (30)is connected to the connector secured to the frame.

2. An actuator according to claim 1, wherein the coupling means comprise a first element (8) secured to the second end of the secondary shaft (6) and a second element (5) connected to rotate with the outlet shaft, the secondary shaft (6) being mounted to slide in a first sliding direction between a first position in which the two elements (8, 5) are disengaged from each other and a second position in which the two elements (8, 5) are coupled to rotate with each other, a resilient member (9) urging the secondary shaft (6) into its first position.

3. An actuator according to claim 2, wherein the activation rod (10) is mounted to slide along a second sliding direction substantially perpendicular to the first sliding direction between a first position in which the rod (10) has a first end projecting in the vicinity of the connector (3) secured to the frame (1) and a second end disengaged from the coupling means, and a second position in which the activation rod (10) is pushed in relative to the frame (1) and the second end projects between the elements (8,5) in order to prevent them being coupled together.

4. An actuator according to any preceding claim including a brake to hold the outlet shaft in position in the absence of power supply to the motor (2).

5. An actuator according to any preceding claim including a torque limiter to avoid damaging the control surface when the operator brings it into abutment without reducing the speed of rotation of the maintenance tool.
